**Europäisches Patentamt**

(19) **European Patent Office**

**Office européen des brevets**

(11) Veröffentlichungsnummer: **0 044 387**
**B1**

(12) ## EUROPÄISCHE PATENTSCHRIFT

(45) Veröffentlichungstag der Patentschrift:
**06.02.85**

(21) Anmeldenummer: **81103884.3**

(22) Anmeldetag: **20.05.81**

(51) Int. Cl.⁴: **H 01 R 13/506**, H 04 Q 1/14

(54) Universalsteckergehäuse für ein löt-, schraub- und abisolierfreies System zum Prüfen, Verbinden und Trennen von Leitungszügen.

(30) Priorität: **17.07.80 DE 3027047**

(43) Veröffentlichungstag der Anmeldung:
**27.01.82 Patentblatt 82/4**

(45) Bekanntmachung des Hinweises auf die Patenterteilung:
**06.02.85 Patentblatt 85/6**

(84) Benannte Vertragsstaaten:
**AT BE CH FR IT LI LU NL SE**

(56) Entgegenhaltungen:
**DE - A - 1 790 336**
**DE - A - 2 125 858**
**DE - A - 2 445 415**
**FR - A - 2 223 937**
**NL - A - 285 060**
**NL - A - 7 407 977**
**NL - A - 7 506 663**

(73) Patentinhaber: **KRONE GmbH, Goerzallee 311,**
**D-1000 Berlin 37 (DE)**

(72) Erfinder: **Stoewe, Anneliese, Streitstrasse 32,**
**D-1000 Berlin 20 (DE)**
Erfinder: **Hegner, Gunter, Waidmannsluster Damm 62,**
**D-1000 Berlin 27 (DE)**

(74) Vertreter: **Patentanwälte Beetz sen. - Beetz jun. Timpe -**
**Siegfried - Schmitt-Fumian et al, Steinsdorfstrasse 10,**
**D-8000 München 22 (DE)**

## Beschreibung

Die Erfindung betrifft ein Universalsteckergehäuse für ein löt-, schraub- und abisolierfreies System, bei dem die Blattfederschenkel des Kontaktelementes beim Eindrücken des unter 45° stehenden Leiters gegenläufig verdreht werden – kurz genannt LSA-Plus-System-, zum Prüfen, Verbinden und Trennen von Leitungszügen und bezweckt, eine einfache und preiswerte Einrichtung dieser Art zu schaffen, die entsprechend ihrem hohen Bedarf kostengünstig als Massenartikel herstellbar ist.

Aus der DE-A-1 790 336 ist für eine elektrische Anschlussarmatur ein Steckergehäuse bekannt, das aus zwei identischen flachen Schalenhälften besteht, die durch Rasthaken und zugehörige Öffnungen miteinander verbindbar sind, und in dem eine oder zwei Leiterplatten sowie eine Zugentlastung angeordnet sind.

Anderseits ist aus der NL-A-285 060 für einen Trennlötösenstreifen ein Steckergehäuse bekannt, das aus zwei identischen Schalenhälften besteht und in dem Kontaktmesser angeordnet sind, wobei an einer Austrittsöffnung der Kontaktmesser eine Aufnahme angeordnet ist, die in den Schalenhälften seitlich geführt und abgestützt ist.

Der Erfindung liegt die Aufgabe zugrunde, ein Universalsteckergehäuse der eingangs genannten Art zu entwickeln, das in die Trenn- bzw. Anschlussleisten des LSA-Plus-Systems einzusetzen ist und sich unter Verwendung des gleichen Gehäuses wahlweise zum Einbau einer Leiterplatte oder zum Einbau zweier Kontaktmesser eignet.

Zur Lösung dieser Aufgabe ist das Universalsteckergehäuse durch die folgenden Merkmale gekennzeichnet:

a) das Universalsteckergehäuse hat zwei identische Schalenhälften, die durch Rasthaken und durch zugehörige Öffnungen miteinander verbindbar sind,

b) in die Schalenhälften sind wahlweise entweder ein oder zwei Kontaktmesser mittels eines dazu passenden Einlegeteils oder eine Leiterplatte mit aufgedruckten Leiterbahnen mittels eines dazu passenden Einlegeteils einlegbar und fixierbar, und

c) am Einlegeteil sind Rasthaken oder Rastknöpfe zur Verrastung an einer Anschlussleiste angeformt.

Vorteilhafte weitere Ausgestaltungen der Erfindung sind in den Unteransprüchen gekennzeichnet.

In vorteilhafter Weise werden durch die wahlweise Verwendung zweier verschiedener Arten von Einlegeteilen in den identischen, kostengünstig herstellbaren Schalenhälften mit diesem Universalsteckergehäuse unterschiedlichste Prüfungen, Verbindungen und Trennungen von Leitungszügen an den Geräten durchgeführt.

In der Zeichnung ist ein Ausführungsbeispiel dargestellt. Es zeigt:

Fig. 1 die Hauptansicht einer Schalenhälfte des Universalsteckergehäuses,

Fig. 1a den Schnitt A–A nach Fig. 1,

Fig. 1b den Schnitt B–B nach Fig. 1,

Fig. 2 das Universalsteckergehäuse mit aufgebrochenem Schnittverlauf, um den Anschluss zwischen Leiter und Kontaktmesser darzustellen,

Fig. 2a die Seitenansicht des Universalsteckergehäuses mit den Kontaktmessern im Schnitt,

Fig. 2b die Draufsicht nach Fig. 2,

Fig. 3 die Kupplung im Schnitt,

Fig. 4 die Seitenansicht zweier Universalsteckergehäuse mit eingesetzter Leiterplatte im Schnitt,

Fig. 5 die Vorderansicht des Universalsteckergehäuses und

Fig. 6 die Draufsicht nach Fig. 4.

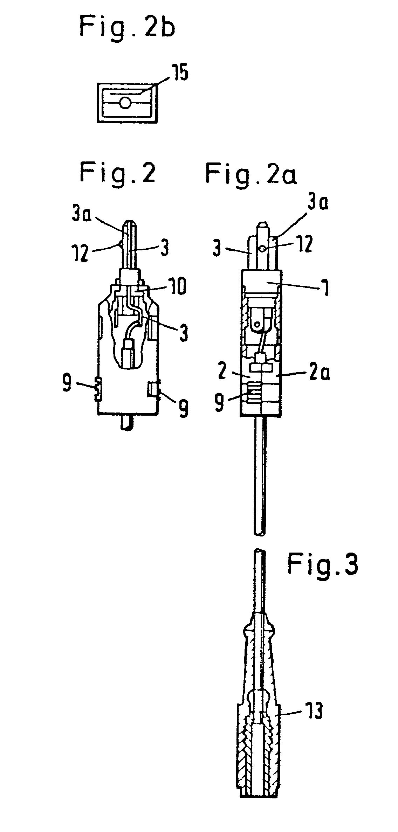

Das in den Fig. 2, 4 und 5 dargestellte Universalsteckergehäuse 1 wird in die vorgesehene Öffnung der LSA-Plus-Leiste gesteckt und greift mit seinen Kontaktelementen unterbrechungslos die Kontaktfedern der Trennleiste ab oder wird auf den durchgeschalteten Leitungsweg der Anschlussleiste gesteckt.

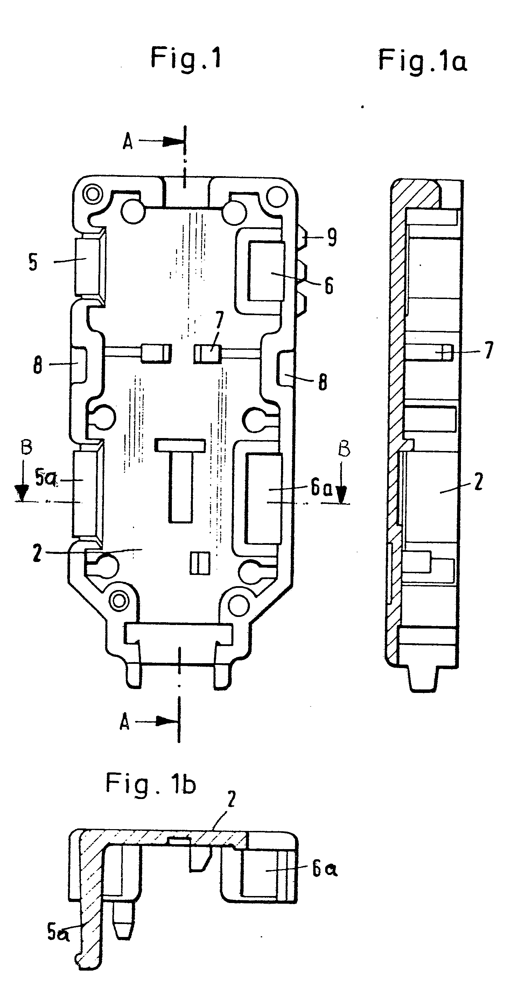

Die Fig. 1 zeigt eine Schalenhälfte 2, die mit einer formmässig identischen zweiten Schalenhälfte 2a das Universalsteckergehäuse 1 bildet. Die beiden Schalenhälften 2, 2a werden mittels Rasthaken 5, 5a verrastet, wobei jeweils zwei Rasthaken 5, 5a der einen Schalenhälfte 2 in zwei Öffnungen 6, 6a der anderen Schalenhälfte 2a eintauchen. – Fig. 1, 1a und 1b –.

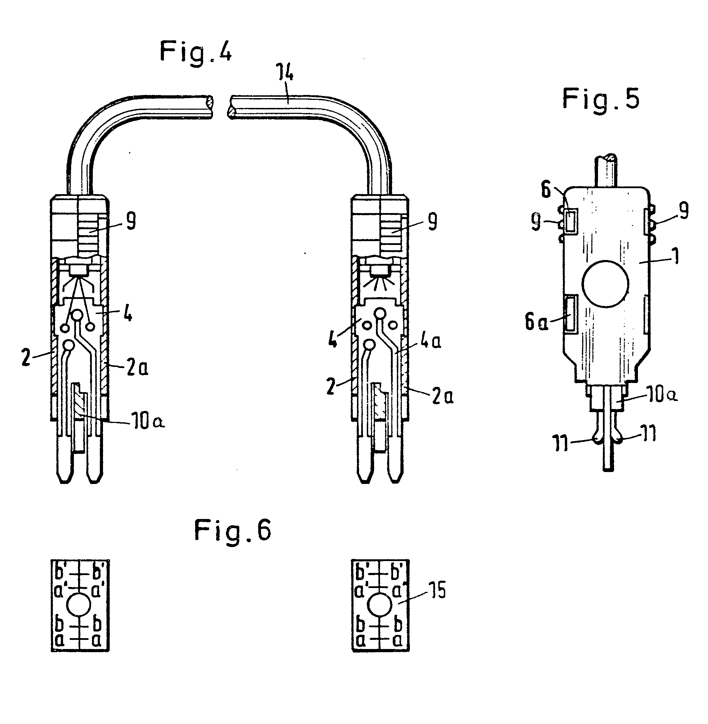

In das Universalsteckergehäuse 1 selbst können vermittels verschiedener Einlegeteile entweder Kontaktmesser 3, 3a in variabler Verbindung miteinander oder Leiterplatten 4 – Fig. 3 und 4 – eingebaut werden.

Die Leiterplatten 4 können eingelötete Schaltelemente zur elektrischen Dämpfung oder zur Codierung der Leiterbahn aufweisen.

An den Aussenflächen des Universalsteckergehäuses 1 sind Einkerbungen 8 zum Ansetzen eines Ziehwerkzeuges und Griffigkeitsrippen 9 für das Ziehen von Hand angeordnet.

Wie die Fig. 2, 2a, 4 und 5 zeigen, wird das Einlegeteil 10 bzw. 10a für die verschiedenen Kontaktelemente in den Schalenhälften 2, 2a seitlich geführt und abgestützt.

An diesem Einlegeteil bzw. 10a sind Rasthaken 11, die das Universalsteckergehäuse 1 nach dem Einsetzen klemmen und verriegeln, angeordnet. Wo aus Platzmangel auf eine Verriegelung verzichtet werden muss, sind die Einlegeteile 10 bzw. 10a mit Rastknöpfen 12 versehen.

An der Stirnseite des Universalsteckergehäuses 1 ist – wie die Fig. 2b und 6 zeigen – der Verlauf der Durchverbindung mittels einer Bedruckung 15 angezeigt.

Wie die Fig. 1 ferner zeigt, ist im Universalsteckergehäuse 1 eine Zugentlastung 7 für eine Schnur vorgesehen.

Wie die Fig. 4 zeigt, werden entweder zwei gleiche Universalsteckergehäuse 1 zum Anschluss im LSA-Plus-System oder ein Universalsteckergehäuse 1 mit einem oder zwei Kupplungen 13 zum Anschluss an Prüfeinrichtungen verwendet.

Wie die Fig. 4 weiterhin zeigt, können vieradrige Schnüre je nach Bedarf durch entsprechendes Verdrallen der Adern einzeln oder miteinander, ein-, zwei- oder vieradrig sein.

Die Schnuradern sind mit den Leiterbahnen 4a der Leiterplatte 4 bzw. mit den Kontaktmessern 3, 3a durch Weichlösung verbunden.

Die Kombination Schnur 14 – Universalsteckergehäuse 1 bildet die Prüf- oder Verbindungsschnur.

## Patentansprüche

1. Universalsteckergehäuse für ein löt-, schraub- und abisolierfreies System, bei dem die Blattfederschenkel eines Kontaktelementes beim Eindrücken des unter 45° stehenden Leiters gegenläufig verdreht werden (LSA-Plus-System), zum Prüfen, Verbinden und Trennen von Leitungszügen, gekennzeichnet durch die folgenden Merkmale:

a) das Universalsteckergehäuse (1) hat zwei identische Schalenhälften (2, 2a), die durch Rasthaken (5, 5a) und durch zugehörige Öffnungen (6, 6a) miteinander verbindbar sind,

b) in die Schalenhälften (2, 2a) sind wahlweise entweder ein oder zwei Kontaktmesser (3, 3a) mittels eines dazu passenden Einlegeteils (10) oder eine Leiterplatte (4) mit aufgedruckten Leiterbahnen (4a) mittels eines dazu passenden Einlegeteils (10a) einlegbar und fixierbar, und

c) am Einlegeteil (10 bzw. 10a) sind Rasthaken (11) oder Rastknöpfe (12) zur Verrastung an einer Anschlussleiste angeformt.

2. Universalsteckergehäuse nach Anspruch 1, dadurch gekennzeichnet, dass eine Zugentlastung (7) im Universalsteckergehäuse (1) angeordnet ist.

3. Universalsteckergehäuse nach Anspruch 1, dadurch gekennzeichnet, dass an den Aussenflächen des Universalsteckergehäuses (1) Einkerbungen (8) und Griffigkeitsrippen (9) angeordnet sind.

4. Universalsteckergehäuse nach Anspruch 1, dadurch gekennzeichnet, dass das Einlegeteil (10 bzw. 10a) an der Austrittsöffnung der Kontaktmesser (3, 3a) bzw. der Leiterplatte (4) angeordnet und in den Schalenhälften (2, 2a) seitlich geführt und abgestützt ist.

5. Universalsteckergehäuse nach Anspruch 1, dadurch gekennzeichnet, dass an der Stirnseite des Universalsteckergehäuses (1) eine Beschriftung (15) angebracht ist, die die Schaltfunktion der Stecker bzw. die Durchverbindung der Schnüre (14) darstellt.

6. Universalsteckergehäuse nach Anspruch 1, dadurch gekennzeichnet, dass am Universalstekkergehäuse (1) über eine Verbindungsschnur mit variabler Aderanzahl ein oder zwei Kupplungen (13) zum Anschluss an Prüfeinrichtungen oder ein zweites Universalsteckergehäuse (1) anschliessbar sind.

## Claims

1. Universal plug housing for a solderless, non-screwed and wire-stripping-free system for testing, connecting and disconnecting conductor cords, in which the leaf spring arms of a terminal element are oppositely rotated upon insertion of the conductor wire which is offset at an angle of 45°, characterized by the following features:

a) the universal plug housing (1) comprises two identical shell halves (2, 2a) adapted to be joined to one another by engaging hooks (5, 5a) and openings (6, 6a) associates therewith,

b) the shell halves (2, 2a) are adapted for selective insertion and fixing of either one or two contact blades (3, 3a) by means of a matching insert (10) or of a printed wiring board (4) having printed conductors (4a) thereon by means of a matching insert (10a), and

c) engaging hooks (11) or engaging bosses (12) are integrally formed with the insert (10 and 10a, respectively) for locking engagement with a terminal strip.

2. Universal plug housing as claimed in claim 1, characterized in that pressure relief means (7) is disposed in the universal plug housing (1).

3. Universal plug housing as claimed in claim 1, characterized in that the outer surfaces of the universal plug housing (1) are provided with notches (8) and gripping ribs (9).

4. Universal plug housing as claimed in claim 1, characterized in that the insert (10 and 10a, respectively) is disposed at the exit opening of the contact blades (3, 3a) and, respectively, of the printed wiring board (4) and is laterally guided and supported in the shell halves (2, 2a).

5. Universal plug housing as claimed in claim 1, characterized in that markings (15) are provided on the end face of the universal plug housing (1), said markings representing the switching function of the plugs and, respectively, the through-connection of the cords (14).

6. Universal plug housing as claimed in claim 1, characterized in that one or two couplings (13) may be connected to the universal plug housing (1) via a connecting cord having a variable number of wires, for connection to testing equipment or to a second universal plug housing (1).

## Revendications

1. Boîtier de fiche universelle pour un système ne requérant ni soudure, ni vissage, ni dénudage, dans lequel les branches élastiques d'une pièce de contact sont tordues en sens opposé au moment de l'enfoncement du conducteur disposé à 45° (système LSA-Plus) pour tester, connecter et séparer des lignes, caractérisé par les éléments suivants:

a) le boîtier de fiche universelle (1) possède deux demi-coquilles identiques (2c, 2a) qui peuvent être assemblées par des crochets d'enclenchement (5, 5a) et par des cavités correspondantes (6, 6a),

b) dans les demi-coquilles (2, 2a) peuvent être montés et fixés au choix, soit un ou deux couteaux de contact (3, 3a) au moyen d'une pièce de montage appropriés (10) soit une plaquette, (4) avec des circuits imprimés (4a) au moyen d'une pièce de montage appropriée (10a), et

c) la pièce de montage (10 ou 10a) présente des crochets d'enclenchement (11) ou des boutons d'enclenchement (12), pour assurer l'enclenchement dans une réglette de raccordement.

2. Boîtier de fiche universelle suivant la revendication 1, caractérisé en ce qu'un dispositif de décharge de traction (7) est disposé dans le boîtier de fiche universelle (1).

3. Boîtier de fiche universelle selon la revendication 1, caractérisé en ce que des encoches (8) et des nervures de préhension (9) sont disposées sur les surfaces extérieures du boîtier de fiche universelle (1).

4. Boîtier de fiche universelle selon la revendication 1, caractérisé en ce que la pièce de montage (10 ou 10a) est disposée à l'ouverture de sortie du couteau de contact (3, 3a) ou la plaquette (4) et est guidée et soutenue latéralement dans les demi-coquilles (2, 2a).

5. Boîtier de fiche universelle selon la revendication 1, caractérisé en ce qu'une inscription (15) est disposée sur la face antérieure du boîtier de fiches universelles (1), pour indiquer la fonction de commutation de la fiche ou la connexion des câbles (14).

6. Boîtier de fiche universelle selon la revendication 1, caractérisé en ce qu'un ou deux prolongateurs (13) peuvent être raccordés au boîtier de fiche universelle (1) par un câble de connexion à un nombre de fils variable pour le raccordement à des dispositifs d'essai ou à un second boîtier de fiche universelle (1).

## Fig.1

## Fig.1a

## Fig. 1b

Fig.2b

Fig.2    Fig.2a

Fig.3

# Fig.4

# Fig.5

# Fig.6